# EUROPÄISCHE PATENTSCHRIFT

(11) **EP 2 132 511 B1**
(45) Veröffentlichungstag und Bekanntmachung des Hinweises auf die Patenterteilung: **16.04.2014**
(21) Anmeldenummer: 08734668.0
(22) Anmeldetag: 19.03.2008
(51) Int. Cl.: F27B 9/40, F27D 19/00, F27D 21/00, F27B 17/00, B28B 11/24, F27B 9/10, F27B 9/30, C04B 35/00

(54) **VERFAHREN UND EINRICHTUNG ZUM TROCKNEN VON FORMTEILEN**
METHOD AND DEVICE FOR DRYING MOULDED PARTS
PROCÉDÉ ET DISPOSITIF POUR SÉCHER DES PIÈCES MOULÉES

(30) Priorität: 03.04.2007 DE 202007004998 U; 26.10.2007 DE 202007015025 U
(43) Veröffentlichungstag der Anmeldung: 16.12.2009
(73) Patentinhaber: Hans Lingl Anlagenbau und Verfahrenstechnik GmbH & Co. KG, 86381 Krumbach (DE)
(72) Erfinder: WAGNER, Christian, 86381 Krumbach (DE)
(74) Vertreter: Ernicke, Klaus Stefan
(86) Internationale Anmeldenummer: PCT/EP2008/002191
(87) Internationale Veröffentlichungsnummer: WO 2008/119471

(56) Entgegenhaltungen:
- EP-A- 0 248 168
- FR-A- 2 582 644
- US-A- 4 487 577

## Beschreibung

Die Erfindung betrifft ein Verfahren und eine Einrichtung zum Trocknen von Formteilen aus plastischen Massen mit den Merkmalen im Oberbegriff des Verfahrens- und Vorrichtungshauptanspruchs.

Aus der Praxis sind Trocknungseinrichtungen für keramische Formteile in verschiedenen Varianten, z.B. als stationärer Kammertrockner oder als Durchlauf- oder Tunneltrockner bekannt. Das Trockengut wird hierbei in einem von Wänden umschlossenen Raum mittels zugeführter Trockenluft mit einer geregelten Klimatisierung getrocknet. Bei der Klimatisierung werden Temperatur und Feuchte der Trockenluft geregelt. Hierfür weist die Trocknungseinrichtung mindestens eine separate Heizeinrichtung für die Trockenluft auf, die entsprechend von der Klimatisierungseinrichtung geregelt und gesteuert wird. Ziel der vorbenannten Technik ist es, die Trocknung möglichst schnell durchzuführen, wofür der Zusatzaufwand einer separaten Trockenluftbeheizung in Kauf genommen wird. Die Trockendauer beträgt bei konventionellen Trocknern je nach Art des Trockengutes ein bis zwei Tage. Mit Schnelltrocknern kann eine Trockendauer von ca. drei Stunden über einen entsprechend gesteigerten Einsatz von Heizenergie erreicht werden. Die Klimaregelung über Feuchte und Temperatur macht außerdem Zusatzmaßnahmen an der Trocknungseinrichtung erforderlich, insbesondere im Bereich der Wärmedämmung. Die Wände der Trocknungseinrichtung bedürfen einer starken Isolierung. Die Klimaregelung von Temperatur und Feuchte macht eine aufwändige Steuerung erforderlich. Insgesamt ist daher der Bauaufwand von bekannter Trocknungseinrichtung hoch.

Die EP 0 248 168 A2 zeigt einen Kammertrockner für keramische Formlinge mit einer gasbetriebenen Heizeinrichtung für die Trockenluft. Die FR 2 582 644 A1 offenbart einen ähnlichen Trockner für keramische Formlinge, bei dem die Heizeinrichtung für die Beheizung der Trockenluft von einem steuerbaren Wärmetauscher gebildet wird. Die US 4,487,577 A befasst sich mit der Trocknung von nassen Schüttgütern, insbesondere nasser Kohle und lehrt ebenfalls den Einsatz eines gesteuerten und mit einem Treibstoff betriebenen Brenners zur Beheizung der Trocknungsluft.

Der Erfindung liegt die Aufgabe zu Grunde, eine bessere Trocknungstechnik für Formteile aus plastischen Massen, insbesondere keramische oder keramikähnliche Trockengüter, aufzuzeigen.

Die Erfindung löst diese Aufgabe mit den Merkmalen im Verfahrens- und Vorrichtungshauptanspruch.
Die erfindungsgemäße Trocknungstechnik ist für beliebige Formteile aus plastischen Massen, insbesondere aus keramischen oder keramikähnlichen Werkstoffen geeignet. Sie hat den Vorteil, dass sie mit einem wesentlich verringerten Energieeinsatz und mit einem deutlich einfacheren Bauaufwand auskommt. Der Trocknungsprozess kann mit der aus der Umgebung des Trocknungsraums zur Verfügung gestellten Wärmeenergie durchgeführt werden, ohne dass es einer energieaufwändigen Zusatzbeheizung der Trocknungsluft bedarf.

Die Trocknungsluft kann hierfür aus geeigneten Umgebungsbereichen ggf. unter Nutzung vorhandener Wärmepotentiale geholt und z.B. vom Dachbereich einer Halle abgesaugt werden. Die Dachluft ist in der Regel wärmer als die Bodenluft.

Der Trocknungsprozess kann über die Feuchte des Trockenguts gesteuert und geregelt werden. Bei Erreichen der gewünschten Restfeuchte im Trockengut kann der Trocknungsprozess beendet oder verlagert werden. Die Trocknung kann zwar länger als beim Stand der Technik dauern und eine erhöhte Luftumwälzung verlangen. Im Gegenzug hierfür wird jedoch durch die deutlich vereinfachte Klimasteuerung und -regelung und den reduzierten Energieaufwand erheblich an Kosten gespart. Der Trocknungsraum kann einfacher ausgebildet sein. Er braucht keine aufwändige Wärmeisolierung. Auch die Kaltabstrahlung von Boden und Wänden des Trocknungsraums ist unproblematisch.

Die Trocknungsdauer verlängert sich zwar und kann zum Beispiel je nach Trockengut zwischen zwei und fünf Tagen betragen. Für gleichen Trockengutdurchsatz wie beim Stand der Technik ist daher ein größeres Trocknungsraumvolumen erforderlich. Der hierfür getätigte Aufwand ist jedoch vergleichsweise gering und stellt eine Einmal-Investition dar. Auf der anderen Seite spart die erfindungsgemäße Trockentechnik in hohem Maß Betriebskosten ein und bietet eine gesamtwirtschaftlich vorteilhafte Lösung. Je höher die Energiepreise steigen, desto stärker fallen die betriebswirtschaftlichen Vorteile ins Gewicht. Durch den möglichen Verzicht auf eine Zusatzbeheizung der Trockenluft wird außerdem die Umwelt geschont.

Für eine optimale Ausnutzung der Energieressourcen kann eine regenerative Wärmerückgewinnung, insbesondere aus der Abluft des Trocknungsraums, vorteilhaft sein. Hierdurch kann die Zuluft entsprechend vorgewärmt werden, was für eine Verkürzung des Trocknungsprozesses sorgt. Zur Wärmerückgewinnung kann beispielsweise ein Wärmetauscher verwendet werden, in dem Zuluft und Abluft im Sinne direkter Wärmeübertragung im Gegenstrom geführt sind. Durch die regenerative Wärmerückgewinnung kann auch eine Entfeuchtung der Zuluft erreicht werden. Außerdem kann der Kondensationspunkt unterschritten werden.

Die Feuchtebestimmung des Trockenguts kann in beliebig geeigneter Weise mit beliebig geeigneten Vorrichtungen durchgeführt werden. Geeignete Techniken sind zum Beispiel die elektrische Leitwertmessung und/oder eine Schwindungsmessung. Die Messungen können online während des Trocknungsprozesses kontinuierlich durchgeführt werden. Aus den Messkurven können in geeigneter Weise Rückschlüsse auf den Trocknungsprozess und die erforderlichen Klimatisierungsmaßnahmen gezogen werden. Dies kann vollautomatisch durch eine Trocknungssteuerung oder bei verringertem Aufwand von Hand geschehen.

Bei der erfindungsgemäßen Trocknungseinrichtung kann weitgehend konventionelle Trocknungstechnik eingesetzt werden, zum Beispiel im Bereich Klimatisierung, Belüftung und Steuerung. Durch den möglichen Entfall einer Temperaturregelung kann hierbei der Bau- und Steuerungsaufwand wesentlich reduziert werden. Auch die Maschinentechnik für die Klimatisierung kann vereinfacht werden, zum Beispiel im Bereich der Belüftungseinrichtungen.

Die beanspruchte Trocknungstechnik bietet besondere Vorteile durch eine schonende und gleichmäßige Trocknung der Formteile. Das Entstehen von stabilitäts- und formkritischen Spannungen im Trockengut kann vermieden oder zumindest wesentlich reduziert werden. Durch eine verlängerte Trockendauer hat der Formling Zeit, innere Spannungen abzubauen, die sich beim Formprozess ergeben können. Dies verringert den Ausschuss und erhöht die Wirtschaftlichkeit. Die Formlinge können im Bereich der Formungs- oder Extrusionstemperatur belassen und getrocknet werden. Ferner kann auf eine Dampfbeaufschlagung der plastischen Masse beim Formprozess verzichtet werden. Mit der beanspruchten Trocknungstechnik können auch problematische Formteile wirtschaftlich und betriebssicher getrocknet werden, die z.B. variierende Wandstärken und/oder komplizierte Formgebungen haben.

Der Trocknungsprozess kann mehrstufig sein und z.B. zwei oder mehr Stufen beinhalten. Der Trockenraum kann einteilig oder mehrteilig ausgebildet sein, wobei die Prozessstufen in verschiedenen Trockenraumteilen durchgeführt werden. In der Anlage vorhandene Wärmeüberschüsse können gesammelt und z.B. für die rasche und energiegünstige Fertigtrocknung verwendet werden.

In den Unteransprüchen sind weitere vorteilhafte Ausgestaltungen der Erfindung angegeben.

Die Erfindung ist in den Zeichnungen beispielsweise und schematisch dargestellt. Im Einzelnen zeigen:
- Figur 1:: eine schematische Ansicht einer Anlage zu Produktion und Trocknung von keramischen Gütern mit einer Trocknungseinrichtung,
- Figur 2:: eine schematische Draufsicht auf eine solche Trocknungseinrichtung,
- Figur 3:: eine schematische Darstellung einer Einrichtung zur Feuchtebestimmung des Trockenguts,
- Figur 4:: eine Variante der Luftführung mit Regenerierung,
- Figur 5 und 6:: eine Variante der Trocknungseinrichtung mit einem mehrteiligen Trocknungsraum in perspektivischen Ansichten
- Figur 7 und 8:: verschiedene keramische Teile und
- Figur 9:: bespielhafte Kurven für Schwindung und elektrische Leitfähigkeit im Trockengut sowie Feuchte und Temperatur der Trockenluft.

Die Erfindung betrifft eine Trocknungseinrichtung (8) und ein Verfahren zum Trocknen von Formteilen oder Gütern (2) sowie eine Anlage (1) mit mindestens einer solchen Trocknungseinrichtung (8).

Die Formteile (2) bestehen aus plastischen Massen und können in beliebiger Weise durch Giessen, Pressen, Extrudieren oder dgl. geformt werden. Die plastischen Massen können aus beliebigen geeigneten Werkstoffen bestehen, z.B. keramischen oder keramikähnlichen Materialien. Dies können z.B. Ton, Lehm, technische Keramiken, Steingut, Porzellan oder dergl. sein.

Bei den Formteilen (2) kann es sich z.B. um keramische Formlinge, insbesondere um massive oder gelochte Ziegel handeln, z.B. Mauer- oder Dachziegel. Die Formteile (2) können von beliebiger Art und Größe sein. Der Einsatzbereich des keramischen oder keramikähnlichen Trockenguts (2) ist beliebig und kann z.B. im Bau-, Sanitär- oder Haushaltssektor liegen.

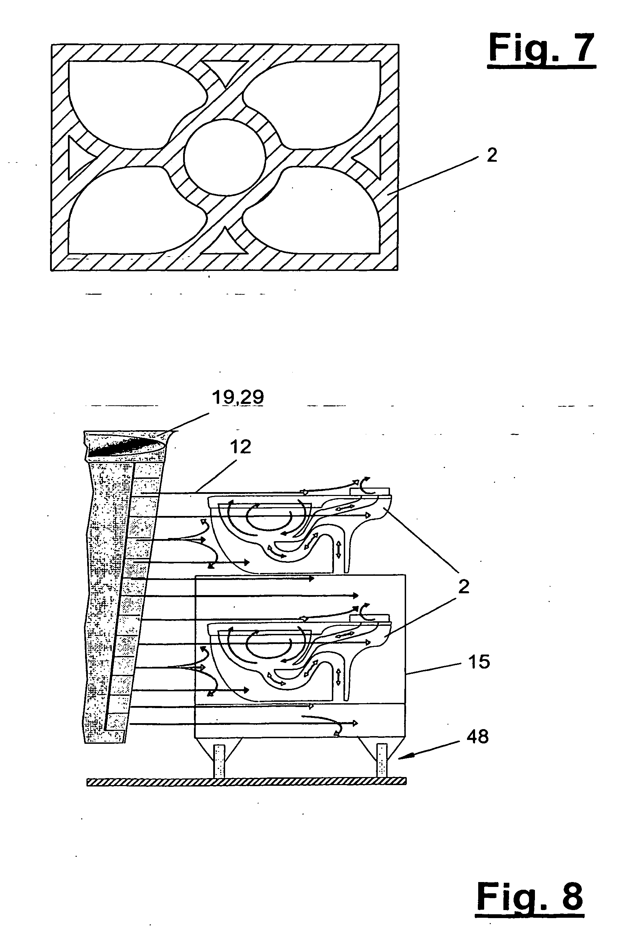

Figur 7 und 8 zeigen keramische Formteile (2), die durch ihre Formgebung beim Trocknen zu Rissbildungen neigen. Sie sind schwer zu trocknen und stellen hohe Anforderungen an eine Trocknungseinrichtung (8). In Figur 7 ist ein Ornamentziegel dargestellt, der große Hohlräume und relativ dünne Wandstärken aufweist. Die Wandungsstege sind gekrümmt, wobei sich an den Verbindungsstellen mehrerer Wandstege partielle Wandverdickungen ergeben können. Derartige Ornamentziegel werden als Ventilationsziegel eingesetzt und dienen zur Belüftung von Räumen in heißen Ländern. Die Ziegelgeometrie ist für das Extrudieren einerseits und das anschließende Trocknen andererseits diffizil. Mit der nachfolgend beschriebenen Trocknungstechnik lassen sich derartige Ornamentziegel sicher und formbeständig trocknen, wobei die mit konventioneller Trocknungstechnik bisher übliche zweistellige Ausschussrate wesentlich verringert werden kann.

Figur 8 zeigt zwei Formteile (2) aus dem Sanitärbereich in Form von WCs. Sie sind übereinander in einer für eine gute Durchlüftung mit Trockenluft (12) ausgebildeten Aufnahme (15), z.B. einem offenen rahmenartigen Trockengestell, angeordnet. Die innere Geometrie solcher WCs wird zunehmend durch den Einbau vielfältiger zusätzlicher Aggregate zur Wassereinsparung schwieriger. Die Außenflächen sollen aber schön glatt und modisch sein. An das Trocknen stellt dieses Formteil enorme Anforderungen, insbesondere wegen der unterschiedlichen Wandstärken und der Bildung von Spannungen an den Übergängen.

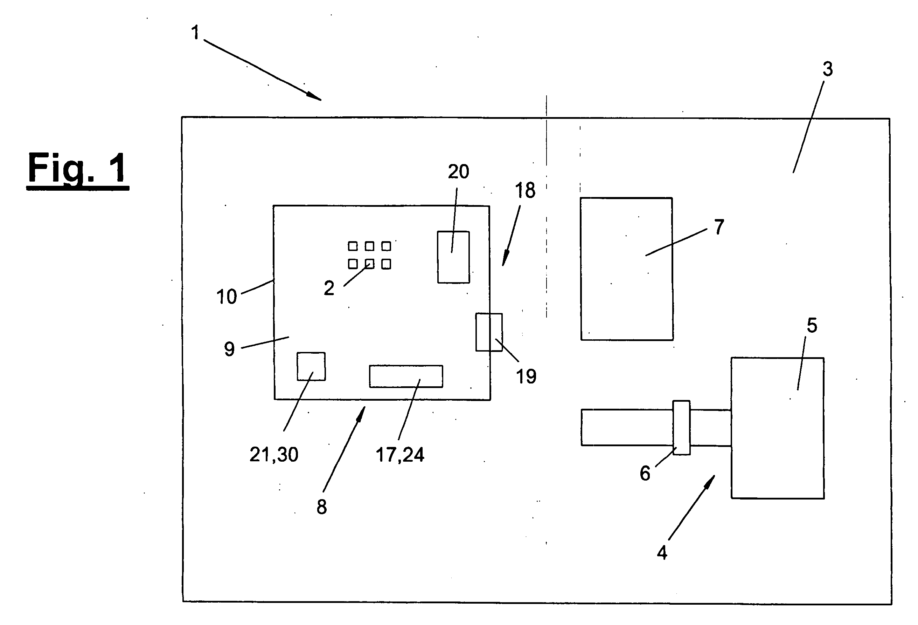

Figur 1 zeigt eine Anlage (1) zur Herstellung und Trocknung der Formteile (2). Sie beinhaltet ein oder mehrere Trocknungseinrichtungen (8) und kann außerdem eine Produktionseinrichtung (4) für die Formteile (2) aufweisen. Die Anlagenteile sind miteinander in einem gemeinsamen Anlagenraum (3) untergebracht, der zum Beispiel eine allseits von Wänden und einem Dach umschlossene Werkhalle sein kann. Im Anlagenraum (3) besteht ein Umgebungsklima, welches auf die Trocknungseinrichtung (8) einwirkt und welches maßgeblich von den anderen im Anlagenraum (3) befindlichen Einrichtungen, insbesondere der Produktionseinrichtung (4), beeinflusst werden kann. Eine Klimabeeinflussung kann außerdem durch äußere Natureinflüsse, zum Beispiel durch Sonneneinstrahlung etc. erfolgen.

Die Produktionseinrichtung (4) kann vollständig oder in Teilen im Anlagenraum (3) angeordnet sein. Alternativ oder zusätzlich können auch andere Einrichtungen im Anlagenraum (3) enthalten sein. Die Produktionseinrichtung (4) oder Teile hiervon können extern angeordnet sei. In der gezeigten Ausführungsform umfasst die Produktionseinrichtung (4) zum Beispiel eine Presse (5) für keramische Formlinge mit einer nachgeschalteten Trenneinrichtung (6), mit der zum Beispiel Ziegelrohlinge von einem ausgepressten Strang abgetrennt und separiert werden. Ferner kann die Produktionseinrichtung (4) einen Brennofen (7) beinhalten, in dem die keramischen Formteile (2) nach dem Trocknen gebrannt werden. Die im Anlagenraum (3) angeordnete Produktionseinrichtung (4) oder deren Teile und/oder andere eventuelle Einrichtungen im Anlagenraum (3) produzieren Abwärme, die an die Umgebung und die Luft im Anlagenraum (3) abgegeben wird.

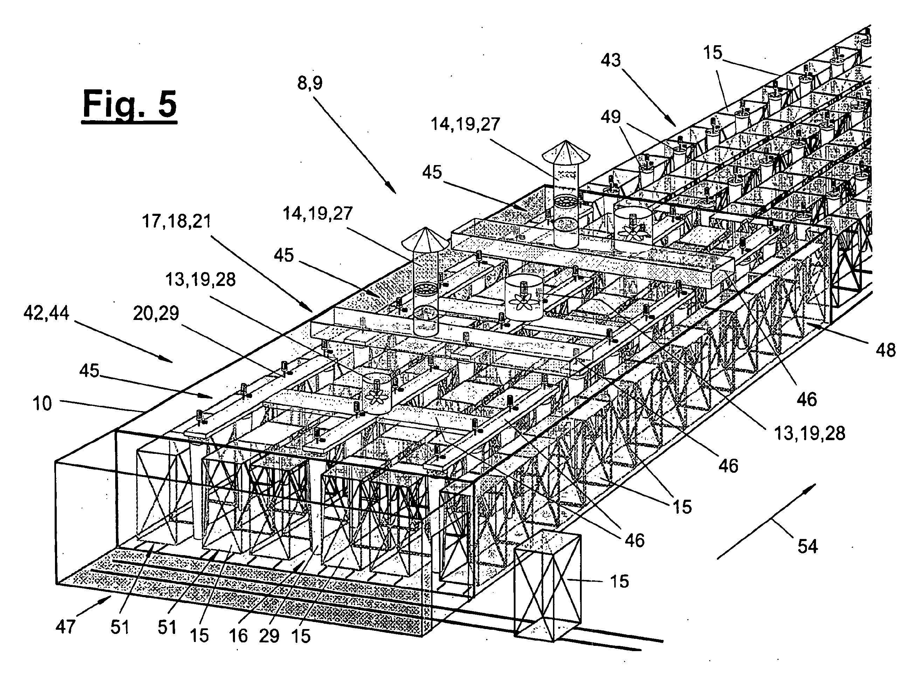

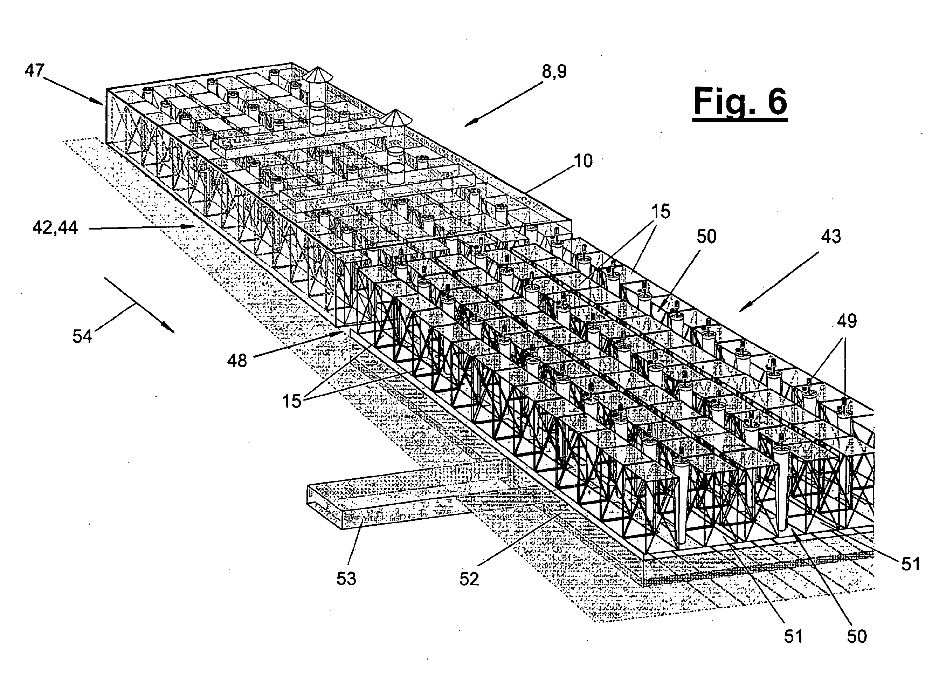

Die Trocknungseinrichtung (8) umfasst mindestens einen Trocknungsraum (9), der von Wänden (10) einschließlich Boden und Dach umgeben wird und-der nach außen gegen die Umgebung im Anlagenraum (3) abgeschlossen werden kann. Der Trocknungsraum (9) ist im Ausführungsbeispiel von Figur 1 bis 4 einteilig. Figur 5 und 6 zeigen eine mehrteilige Variante mit zwei Trockenraumteilen (42,43). Deren Zahl kann alternativ größer sein.

Die Trocknungseinrichtung (8) umfasst ferner eine Einrichtung (17) zur Einstellung des Klimas im Trocknungsraum (9) oder einem Trockenraumteil (42) sowie eine Trocknungssteuerung (24) zur Steuerung und gegebenenfalls Regelung des Klimas. Die Trocknung des Keramikguts (2) erfolgt durch zugeführte Trockenluft (12), deren Klima und insbesondere deren Feuchtegehalt, durch die Klimatisierungseinrichtung (17) beeinflusst wird.

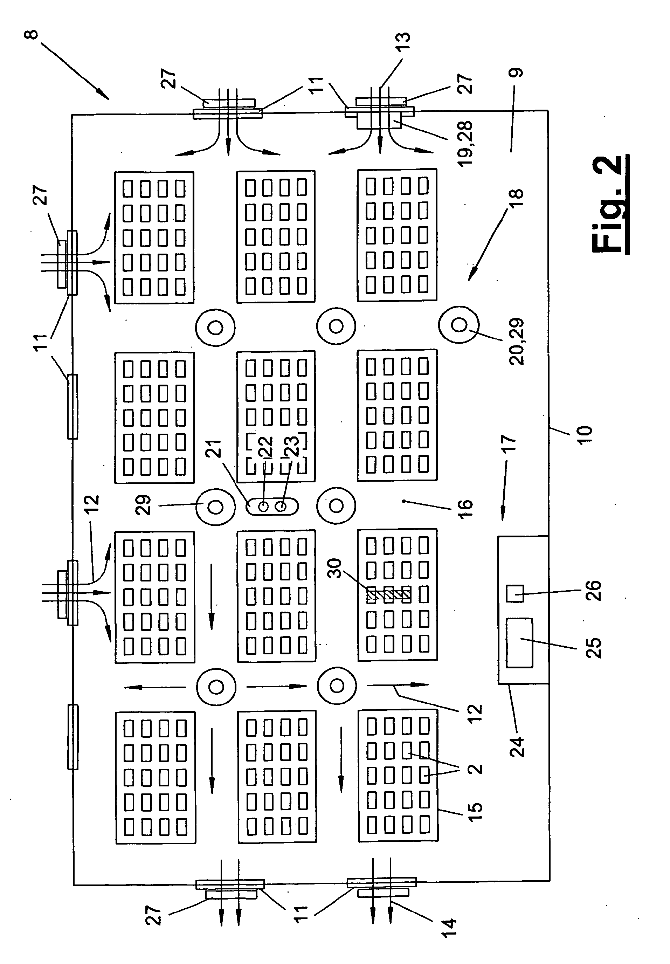

Figur 2 zeigt schematisch den Aufbau einer ersten Variante der Trocknungseinrichtung (8). In der Wand (10) des z.B. einteiligen Trocknungsraums (9) sind z.B. ein oder mehrere Durchlassöffnungen (11) vorhanden, durch die Luft aus der Umgebung des Anlagenraums (3) in den Trocknungsraum (9) und wieder zurück in die Anlagenumgebung strömen kann. Innerhalb des Trocknungsraums (9) kann die Trockenluft (12) zirkulieren. Die Trocknung wird durch einen Durchsatz der Trockenluft bewirkt, wobei mit der Zuluft (13) relativ trockene Luft zugeführt wird, die Feuchtigkeit aus dem im Trocknungsraum (9) befindlichen Trockengut (2) aufnimmt und als feuchte Abluft (14) wieder abgeführt wird. Die Luftführung beim Luftdurchsatz und innerhalb des Trocknungsraums (9) kann beliebig sein.

Das Trockengut (2) ist im Trocknungsraum (9) in belüftungsgünstige Weise angeordnet und befindet sich zum Beispiel auf mehreren Gutaufnahmen (15). Diese können beliebig ausgebildet sein und sind beispielsweise mehrlagige rahmenartige Trockengestelle. Die Formteile (2) können für eine allseitige Belüftung in der Aufnahme (15) gegenseitig beabstandet sein. Zwischen den Aufnahmen oder Trockengestellen (15) können Freiräume oder Gänge (16,50) vorhanden sein. Die Trockenluft (2) kann durch die Aufnahmen (15) und die Freiräume (16) strömen. Die Aufnahmen (15) können für eine schnelle Be- und Entladung des Trocknungsraums (9) beweglich und insbesondere fahrbar sein.

Der Luftdurchsatz in und aus dem Trocknungsraum (9) kann gesteuert und gegebenenfalls geregelt werden. Hierfür sind an den Durchlassöffnungen (11) ein oder mehrere steuerbare Verschlüsse (27), zum Beispiel steuerbare Klappen, vorhanden. Die Verschlüsse können manuell oder maschinell mit geeigneten Antrieben geöffnet und geschlossen werden, wobei auch eine leitungsgebundene oder drahtlose Ansteuerung möglich ist. Hierfür sind die Verschlussantriebe (27) mit der Einrichtung (17) zur Einstellung des Klimas und vorzugsweise mit der Trocknungssteuerung (24) verbunden. Die Zuluft- und Abluftseite können beliebig gegenseitig zugeordnet sein. Beispielsweise kann die Abluft (14) an der der Zuluft (13) gegenüberliegenden Raumseite abgeführt werden. Die Anordnung kann auch anders gewählt sein, zum Beispiel wie in Figur 2 über Eck. Statt mehrerer einzelner Durchlassöffnungen (11) können auch wenige große schachtartige Durchlassöffnungen vorhanden sein.

Die Einrichtung (17) zur Einstellung des Klimas im Trocknungsraum (9), insbesondere zur Einstellung des Klimas der Trocknungsluft (12), kann eine Einrichtung (21) zur Klimamessung aufweisen. Hierbei wird insbesondere die Feuchte und Temperatur der Trockenluft (12) über mindestens einen Feuchtemesser (22) und mindestens einen Temperaturmesser (23) gemessen, die an geeigneter Stelle im Trocknungsraum an ein oder mehreren Stellen untergebracht sind. Sie können sich in Freiräumen (16) und/oder in der Nähe oder am Trockengut (2) befinden.

Die Klimatisierungseinrichtung (17) weist ferner eine Belüftungseinrichtung (18) auf. Diese kann unterschiedlich ausgebildet sein. Die vorher erwähnten Durchlassöffnungen (11) mit den steuerbaren Verschlüssen (27) können Bestandteil der Belüftungseinrichtung (18) sein. Die Belüftungseinrichtung (18) kann ferner eine Einrichtung (19) für den Durchsatz der Trockenluft in und aus dem Trocknungsraum (9) aufweisen. Diese Durchsatzeinrichtung (19) kann ein oder mehrere Durchsatzlüfter (28) haben. Beispielsweise kann an ein oder mehreren Durchlassöffnungen (11) ein solcher Durchsatzlüfter (28) angeordnet sein, mit dem die Zuluft (13) in den Trocknungsraum (9) eingesaugt und die Abluft (14) ausgeblasen wird. Der Durchsatzlüfter (28) kann eine beliebige konstruktive Gestaltung haben und als Radial- oder Axialventilator oder in sonstiger geeigneter weise ausgebildet sein.

Die Belüftungseinrichtung (18) kann alternativ oder zusätzlich eine Einrichtung (19) für die Umwälzung der Trockenluft (12) im Trocknungsraum (9) besitzen. Diese Einrichtung (19) kann zum Beispiel aus mehreren Umwälzlüftern (29) im Trocknungsraum (9) bestehen. Figur 2 zeigt hierfür im Ausführungsbeispiel die Anordnung von ein oder mehreren Drehlüftern (29) in den Gängen oder Freiräumen (16).

Die Trocknungssteuerung (24) kann sich in oder am Trocknungsraum (9) oder an geeigneter Stelle der Trocknungseinrichtung (8) befinden. Sie kann konstruktiv in beliebiger Weise ausgebildet sein und besteht zum Beispiel aus einer Recheneinheit (25), insbesondere einem PC mit dauerhaften und flüchtigen Datenspeichern, ein oder mehreren Prozessoren, Schnittstellen, Ein- und Ausgabeeinheiten und weiteren Peripherieeinheiten. Der Recheneinheit (25) kann außerdem ein Zeitglied (26) zugeordnet sein. Die Trocknungssteuerung (24) ist mit der Einrichtung (17) zur Einstellung des Klimas und mit deren Komponenten, insbesondere der Belüftungseinrichtung (18) sowie deren Komponenten und der Einrichtung (21) zur Klimamessung signal- und steuertechnisch per Leitung oder drahtlos verbunden. Die Trocknungssteuerung (24) kann anhand der Messwerte und eines vorgegebenen Programms zur Klimabeeinflussung eine Regelung des Klimas der Trockenluft (12) im Trocknungsraum (9) durchführen.

Zur Trocknungseinrichtung (8) gehört ferner eine Einrichtung (30) zur Bestimmung der Feuchte des Trockenguts (2). Diese kann in beliebig geeigneter Weise ausgebildet sein und betrieben werden. Insbesondere ist eine Feuchtemessung von Hand in oder außerhalb des Trocknungsraums (9) möglich. Dies kann in konventioneller Weise anhand der Entnahme von keramischen Teilen (2) und der mehrfachen Messung ihres Gewichtes über den Trocknungsverlauf geschehen. In der gezeigten Ausführungsform wird die Trockengutfeuchte innerhalb des Trocknungsraums (9) fortlaufend und zum Beispiel in vorgegebenen Zeitabständen bestimmt. Die Feuchtebestimmung kann mittelbar über eine Messung bzw. Bestimmung des elektrischen Leitwerts (31) im keramischen Teil (2) und/oder über eine Schwindungsmessung des keramischen Teils (2) durchgeführt werden. Bei der nachfolgend beschriebenen Ausgestaltung der Messeinrichtung können beide Messungen in einem Gerät erfolgen. Die Messung(en) können an ein oder mehreren keramischen Teilen (2) und auch an verschiedenen Stellen im Trocknungsraum (9) durchgeführt werden.

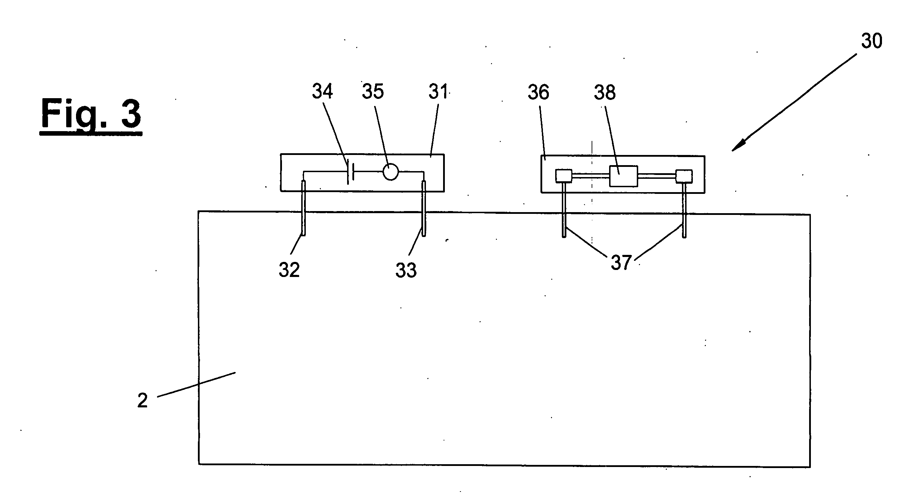

Figur 3 zeigt ein Ausführungsbeispiel einer Einrichtung (30) zur Feuchtebestimmung des Trockenguts (2). Sie besteht aus einem elektrischen Leitwertmesser (31) und einem Schwindungsmesser (36). Die beiden Messgeräte sind in Figur 3 getrennt dargestellt und am gleichen keramischen Teil (2) angeordnet. Sie können alternativ zu einem Gerät kombiniert sein und sich an mehreren keramischen Teilen (2) befinden.

Der Leitwertmesser (31) weist mindestens zwei mit dem Trockengut (2) verbindbare Elektroden (32,33) auf, die zum Beispiel in die weiche keramische Formlingsmasse ein Stück weit eingesteckt werden. Die Elektroden (32,33) sind als Stiftelektroden ausgebildet und sind rückseitig über geeignete Leitungen mit einer Spannungsquelle (34) und einem Messgerät (35) des Leitwertmessers (31) verbunden. Je nach Feuchtegehalt des keramischen Teils (2) ändert sich dessen elektrischer Widerstand. Dementsprechend ändert sich der im Stromkreis fließende Strom bzw. die Spannung, was durch das Messgerät (35) aufgenommen und in einen elektrischen Leitwert umgerechnet wird. Die Mess- oder Rechenergebnisse werden an die Trocknungssteuerung (24) gemeldet und dort zur Steuerung und Regelung des Klimas ausgewertet. Die Messergebnisse können hierbei protokolliert, dokumentiert und in Form von Kurven oder Tabellen über Ausdrucke oder Datenträger oder auf andere Weise ausgegeben werden.

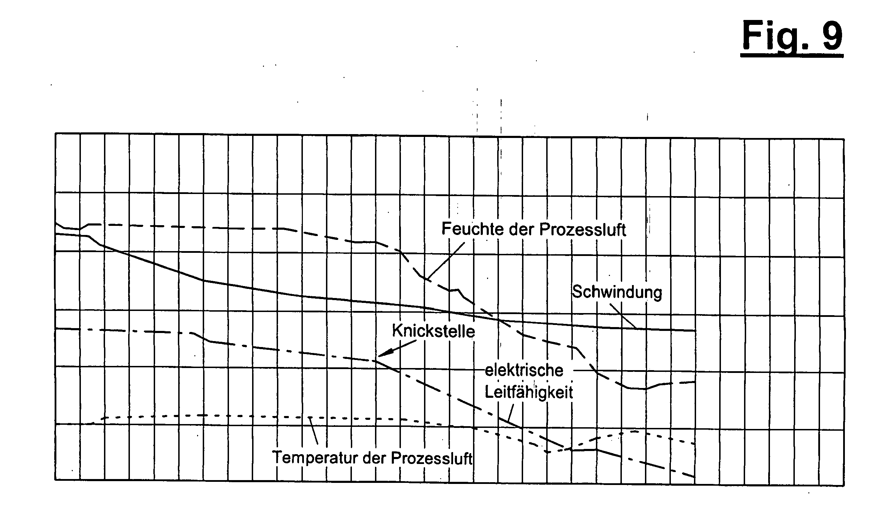

Bei der Auswertung wird der Verlauf des elektrischen Widerstands oder Leitwerts überprüft und ausgewertet. Figur 9 zeigt hierzu beispielhafte qualitative Kurven für den Verlauf der Schwindung und der elektrischen Leitfähigkeit im Trockengut (2) sowie der Feuchte und der Temperatur der Trockenluft (12).

Im Ablauf des Trocknungsvorgangs und insbesondere in dessen Endphase ergibt sich ein relativ abrupter und schneller Abfall des elektrischen Leitwerts. Figur 9 zeigt diese Knickstelle. Dies wird für die Klimaregelung ausgewertet und insbesondere als Startsignal für eine Intensivierung der Belüftung, z.B. für die volle Leistung der Belüftung herangezogen. Diese Erfassung und Auswertung des elektrischen Leitwerts hat allgemeine erfinderische Bedeutung und lässt sich mit Erfolg auch bei konventionellen Trocknungseinrichtungen und Trocknungsverfahren einsetzen.

Der Schwindungsmesser (36) besteht aus mindestens zwei Steckern (37), welche in die weiche Formlingsmasse zu Beginn des Trocknungsprozesses eingesteckt werden können. Die Schwindungsmessung kann nach ein oder mehreren Richtungen erfolgen. Für eine mehrachsige Messung kann die Steckerzahl höher sein und zum Beispiel drei, vier oder mehr Stecker betragen. Die Stecker oder Steckerpaare (37) sind mit gegenseitigem Abstand am Schwindungsgerät (36) angeordnet und sind untereinander durch ein Abstandsmessgerät (38) verbunden. Dies kann beispielsweise ein Potenziometer sein. Wenn beim Trocknungsvorgang mit abnehmender Gutfeuchte eine Schwindung des keramischen Teils (2) eintritt, äußert sich diese in einer Änderung des Steckerabstands, welche durch das Abstandsmessgerät (38) erfasst und an die Trocknungssteuerung (24) zur Auswertung und Protokollierung gemeldet wird. Die Datenverbindung kann über Leitungen oder drahtlos, zum Beispiel per Funk, Infrarot, Ultraschall oder auf andere geeignete Weise erfolgen. Gleiches gilt für den Leitwertmesser (31).

Zur Ausbildung eines Kombigeräts (nicht dargestellt) können die Elektroden (32,33) als Stecker (37) fungieren und eine Doppelfunktion haben sowie mit dem Abstandsmesser (38) verbunden sein.

Bei der Trocknungseinrichtung (8) wird die zum Trocknen der keramischen Teile (2) erforderliche Wärmeenergie im Wesentlichen aus der äußeren Umgebung des Trocknungsraums (9) und aus dem Anlagenraum (3) eingebracht und über die Zuluft (13) aus der Umgebungsluft zugeführt. Diese ist in der vorher erwähnten Weise durch die Einrichtungen im Anlagenraum (3) oder durch äußere Klimaeinflüsse, wie zum Beispiel Sonneneinstrahlung, erwärmt worden.

Die Trocknungseinrichtung (8) arbeitet im Wesentlichen mit dem vorhandenen Energieangebot aus der Umgebung und belässt dieses wie es ist. Auf eine zusätzliche Beheizung der Trockenluft (12) mittels einer steuerbaren Heizeinrichtung mit Strom, fossilen Brennstoffen oder dgl. und auf eine-Temperaturregelung der Trockenluft (12) wird vorzugsweise verzichtet. Dies schließt nicht aus, dass in kleineren Mengen Wärmeenergie durch Heizeinrichtungen im Trocknungsraum (9) oder anderweitig eingebracht wird. Auch die Abwärme der im Trocknungsraum (9) befindlichen Einrichtungen sorgt für eine Erwärmung der Trockenluft (12).

Das Klima der Trockenluft (12) kann im Wesentlichen über die vorhandene Feuchte in der Trockenluft (12) gesteuert und gegebenenfalls geregelt werden, indem entsprechend Zuluft (13) zugeführt und Abluft (14) abgeführt wird. Mit der Zuluft (13) kann sich das Wärmeangebot ändern oder gleich bleiben.

Die Steuerung des Trocknungsprozesses erfolgt über die Feuchte des Trockenguts (2), wobei begleitend das Trockenluftklima gesteuert und geregelt wird. Wenn die Restfeuchte im Trockengut (2) einen vorgegebenen Schwellwert erreicht hat, zum Beispiel 3,5 % Restfeuchte, kann der Trocknungsvorgang beendet und die Trocknungseinrichtung (8) abgeschaltet werden. Je nach Wärmeangebot aus der Umgebung kann der Trocknungsvorgang dabei länger oder kürzer dauern.

Die Klimatisierung der Trockenluft (12) kann ebenfalls nach der Feuchte im Trockengut (2) und nach deren Verlauf gesteuert werden. Hierfür kann in der Trocknungssteuerung (24) ein entsprechender Klimaverlauf vorprogrammiert und hinterlegt sein. Je nach Art und Menge des Trockenguts (2) oder anderen Einflussfaktoren können die Klimatisierungsprogramme variieren. Die Klimatisierung wird vor allem durch die Belüftung mit Luftdurchsatz und ggf. mit Luftumwälzung gesteuert und geregelt.

Wenn in der vorher erwähnten Weise ein abrupter Abfall des elektrischen Leitwerts (Knickstelle in Figur 9) detektiert wird, kann die Klimaregelung und die Beeinflussung der Raumluftfeuchte abgeschaltet und die Belüftung (18) intensiviert und auf einen vorgegebenen Festwert, zum Beispiel auf volle Leistung, geschaltet werden. Hierdurch kann der restliche Trocknungsvorgang beschleunigt werden. Dies ist nach Erkenntnissen der Erfindung ohne Schwindungs- und Rissgefahr in den keramischen Formlingen möglich und lässt sich mit Erfolg auch bei den konventionellen Trocknungsverfahren und Trocknungseinrichtungen mit Klimasteuerung bzw. -regelung über Temperatur und Feuchte mit Erfolg einsetzen.

Im Ausführungsbeispiel der Figuren 1 und 2 wird die Zuluft (13) direkt aus der Atmosphäre des Anlagenraums (3) entnommen und die Abluft (14) direkt an die Atmosphäre wieder abgegeben. Die Zuluft (13) kann aus der direkten Umgebung des Trockenraums (9) zugeführt werden oder alternativ von einer geeigneten Stelle des Anlagenraums (3), z.B. unter dem Dach, abgesaugt und über ein oder mehrere Leitungen zugeführt werden.

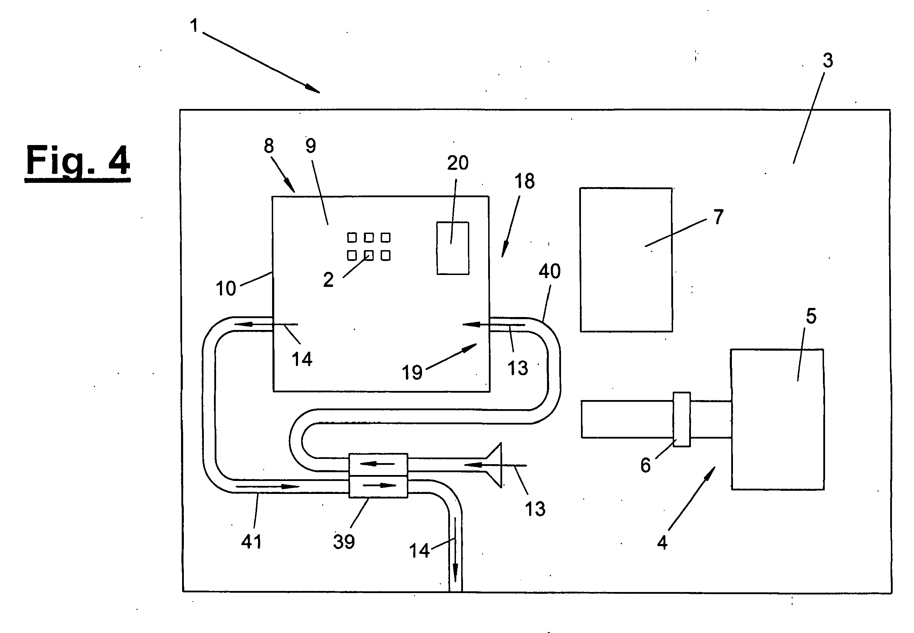

Figur 4 zeigt eine Variante in der Luftführung, mit der eine Aufbereitung und bessere Ausnutzung der Trockenluft möglich ist. Die Belüftungseinrichtung (18) und die Einrichtung zum Luftdurchsatz (19) sind hierfür entsprechend anders ausgebildet.

Die Zuluft (13) wird aus der Raumatmosphäre mit einer geeigneten Belüftungseinrichtung angesaugt und über einen Wärmetauscher (39), z.B. einem Plattenwärmetauscher, mittels einer Zuluftleitung geführt und anschließend durch eine Durchlassöffnung (11) in den Trocknungsraum (9) geleitet. Die Abluft (14) wird einer Abluftleitung (41) aus dem Trocknungsraum (9) aufgenommen und mittels einer Belüftungseinrichtung im Gegenstrom durch den Wärmetauscher (39) und dann weiter zu einem Auslass im Anlagenraum (3) oder in der Umgebung außerhalb des Anlagenraums (3) geführt. Die mit Feuchtigkeit beladene Abluft (14) ist etwas wärmer als die Zuluft (13) und gibt an diese im Wärmetauscher Wärmeenergie ab. Die somit regenerativ erwärmte Zuluft (13) kann mehr Feuchtigkeit im Trocknungsraum (9) aus dem Trockengut (2) aufnehmen, was den Trocknungsvorgang verbessert und beschleunigt. Zusätzliche Wärmeenergie aus einer externen Wärmequelle, z.B. einer fossilen Verbrennung oder dergl. wird auch in dieser Variante nicht oder nicht in einem wesentlichen Maße zugeführt. Über den Wärmetauscher (39) werden die vorhandenen Wärmeenergien nur besser ausgenutzt. Eine Wärmerückgewinnung aus der Abluft (14) zur Beheizung der Zuluft (13) kann auch auf andere beliebig geeignete Weise durchgeführt werden.

In der Ausführungsform von Figur 1 bis 4 ist ein einteiliger Trocknungsraum (9) in Verbindung mit einem einteiligen Trocknungsprozess dargestellt. Figur 5 und 6 zeigen hierzu eine Variante mit einem mehrteiligen Trocknungsprozess und einem mehrteiligen Trocknungsraum (9). Der Trocknungsraum (9) gliedert sich in der gezeigten Ausführung in zwei Trockenraumteile (42,43), die in einer Reihe hintereinander angeordnet sind und in denen zwei getrennte Stufen des Trocknungsprozesses ablaufen. Die Stufen- und Raumteilzahl kann auch größer sein.

Das erste Trockenraumteil (42) stellt einen Klimaraum dar, der von Wänden (10) im wesentlichen dicht umschlossen ist und in dem die Trocknung der auf Trockengestellen (15) befindlichen Formteile (2) in der vorbeschriebenen-Weise langsam und unter Nutzung von Trocknungsluft (12) aus der Umgebung von statten geht. Hierbei wird im Trockenraumteil (42) das Klima und insbesondere die Feuchte der Trockenluft (12) in der vorbeschriebenen Weise geregelt. Ferner wird auch die Feuchte im Trockengut (2) in der vorbeschriebenen Weise gemessen, wobei die Klimatisierung der Trockenluft (12) nach dem Änderungsverlauf der Feuchte gesteuert wird.

Die erste Stufe des Trocknungsprozesses kann beendet werden, wenn die Formteile (2) eine ausreichende Stabilität erreicht haben. Hierfür kann die Schwindung als Schaltschwelle verwendet werden, wobei eine ausreichende Formlingsstabilität z.B. ab ca. 60% bis 70% oder mehr der Gesamtschwindung der Formteile (2) erreicht ist. Anstelle der Schwindung kann auch der Verlauf des elektrischen Leitwerts in den Formteilen (2) gemessen und für die Dauer und Beendigung der ersten Trocknungsstufe herangezogen werden.

Wenn eine ausreichende Formlingsstabilität erreicht ist, kann in einer zweiten Trocknungsstufe eine forcierte Trocknung durchgeführt werden. Während der ersten Trocknungsstufe mit geregelter Klimatisierung und während der Hauptschwindungsphase in den Formteilen (2) wird nur relativ wenig Trockenluft (12) ausgetauscht. Nach Erreichen einer genügenden Formteilstabilität kann bei der forcierten Trocknung ein wesentlich stärkerer Luftaustausch erfolgen. Dieser zweite Prozessschritt wird im zweiten Trockenraumteil (43) und im sog. Fertigtrockenbereich durchgeführt. Bei der forcierten Trocknung kann es zu Gunsten eines starken Luftaustausches vorteilhaft sein, auf eine geschlossene Umwandung zu verzichten. Dies vereinfacht und verbilligt die konstruktive Ausbildung des zweiten Trockenraumteils (43).

Der Klimaraum (42) kann in-ähnlicher Weise wie der Trocknungsraum (9) im ersten Ausführungsbeispiel ausgebildet sein und eine Einreichtung (17) zur Einstellung des Klimas, eine Belüftungseinrichtung (18), eine Einrichtung (21) zur Klimamessung und auch eine Trocknungssteuerung (24) aufweisen. Das erste Trockenraumteil (42) kann eine im wesentlichen geschlossene Wand (10) besitzen, wobei im Innenraum die Formteile (2) auf Trockengestellen (15) in mehreren Lagerreihen (51) mit dazwischen liegenden Gassen (50) angeordnet sind.

Die Belüftungseinrichtung (18) kann wie im ersten Ausführungsbeispiel eine Einreichtung (19) für den Luftdurchsatz und eine Einrichtung (20) für die Luftumwälzung besitzen. Die Zuluft (13) wird mittels mehrerer Ansaugschächte mit Durchsatzlüftern oder Ventilatoren (28) sowie ggf. vorhandenen Klappen aus der Umgebung gesteuert zugeführt. Die Ansaugschächte der Einrichtung (19) sind an eine Verteilung (46) angeschlossen, die mit längs- und/oder quer verlaufenden Lüftungskanälen die Zuluft (13) im Klimaraum (42) verteilt. Die Verteilung (46) kann mit einer Einrichtung (20) zur Luftumwälzung verbunden sein. Hierfür können beispielsweise in den Gassen (50) ein oder mehrere Umwälzlüfter (29), z. B. kegelförmige Drehlüfter, angeordnet sein, die mit ihrer Einlassseite an die Verteilung (46) angeschlossen sind und die Trocknungsluft (12) seitlich über ihren Mantel ausblasen und in die Trockengestelle (15) blasen. Die Ansaugkanäle und die Verteilung (46) können an der Decke des Klimaraums (42) angeordnet sein und die Zuluft (13) von oben in die Einlassöffnungen der Drehlüfter (29) zuführen.

Für die Abluft (14) sind ebenfalls am Dach des Klimaraums (42) Abluftkamine mit einer Einrichtung (19) für den Luftdurchsatz angeordnet, welche steuerbare Verschlüsse oder Klappen (27) und ggf. auch einen Durchsatzlüfter oder Ventilator aufweisen. Die Abluftkamine blasen die feuchte Abluft mit Abstand über der Klimakammer (42) in die Umgebung aus. Sie können ebenfalls mit einer Verteilung (46) verbunden sein, um die Abluft (14) gleichmäßig aus dem Klimaraum (42) abzusaugen.

Das erste Trockenraumteil (42) bzw. der Klimaraum kann ein einheitlicher großer und einzoniger Raum sein, in dem alle Formteile (2) den gleichen Klimatisierungs- und Trocknungsbedingungen unterliegen. In dieser Ausführung bildet der Klimaraum (42) eine Trocknungskammer. Diese wird nach Beendigung der ersten Trocknungsstufe komplett entleert und wieder neu befüllt.

In der gezeigten Ausführungsform ist der Klimaraum (42) als Durchlauftrockner (44) ausgebildet, der mehrere unterschiedlich klimatisierte Trockenzonen (45) aufweist, durch welche die Formteile (2) auf ihren Aufnahmen oder Trockengestellen (15) in Förderrichtung (54) in einer kontinuierlichen oder intermittierenden Förderbewegung hindurch transportiert werden. Die Lagerreihen (51) sind in Förderrichtung (54) ausgerichtet. Die Trockenzonen (45) können in geeigneter Weise durch Schotte oder dergl. gegeneinander abgegrenzt und funktionell abgedichtet werden. Wie Figur 5 verdeutlicht, kann jede Trockenzone (45) ihre eigene Einrichtung (19) für den Luftdurchsatz aufweisen. Die Trockenzonen (45) sind untereinander in geeigneter Weise durch Zwischenwände oder dergl. abgeschottet und besitzen unterschiedliche Klimatisierungen. Jede Trockenzone hat ihre eigene Einrichtung (19) für den Luftdurchsatz, die etwa mittig in der Trockenzone (45) angeordnet ist. Mit dem Trocknungsfortschritt der Formteile (2) und dem Durchlaufen der Trockenzonen steigt der Bedarf an Zuluft (13). Dementsprechend haben die aufeinander folgenden Einrichtungen (19) für den Luftdurchsatz eine steigende Kapazität und Größe. Am Ende der Trockenzonen (45) ist jeweils eine Einrichtung (19) für den Durchsatz der Abluft (14) vorhanden. In der Ausführungsform als Durchlauftrockner (44) kann der Klimaraum (42) am rückwärtigen Ende offen sein, sodass hier auf eine Einrichtung (19) für die Abluft (14) verzichtet werden kann.

Durch die Zonenaufteilung können die Klimatisierung und die Führung der Trockenluft (12) feinfühliger und exakter sein, wobei insgesamt die klimatisierte Trocknung in dem mehrstufigen Prozess und besser und genauer ablaufen kann. In der gezeigten Ausführungsform sind drei Trockenzonen (45) vorhanden. Die Zonenzahl kann alternativ kleiner oder größer sein.

Am Eingang des ersten Trockenraumteils (42) kann eine Beschickungseinrichtung (47) für die Formteile (2) vorhanden sein. Ferner weist der Trocknungsraum (9) eine Fördereinrichtung (48) für die Trockengestelle oder die in anderer Weise ausgebildeten Aufnahmen (15) für die Formteile (2) auf. Die Fördereinrichtung (48) verbindet auch die verschiedenen Trockenraumteile (42,43). Die Beschickungseinrichtung (47) besteht z. B. aus einem schienengebundenen Querförderer, mit dem die Trockenstelle (15) in einen eingangseitigen und nach außen abschottbaren Verteilerraum vor den Klimaraum (42) transportiert und in die Lagerreihen (51) verteilt und eingeführt werden können.

Das zweite Trockenraumteil (43) kann umseitig offen und ohne Wände (10) ausgeführt sein. Auch hier befinden sich in den Gassen (50) Belüftungseinrichtungen (49), die z. B. als konische Drehlüfter oder dergl. ausgebildet sind und die Trockenluft (12) in die Trockengestelle (15) blasen. Die Trockenluft (12) kann aus der Umgebung entnommen werden. Figur 5 und 6 zeigen hierzu eine besondere Variante, bei der der Fertigtrockenbereich (43) einen Doppelboden aufweist, der als Wärmekammer (52) zur Aufnahme von Warmluft ausgebildet ist, die durch eine schachtartige Zuführung (53) eingespeist wird. An der Decke der Wärmekammer (52) verlaufen die Gleise oder anderen Trag- und Fördermittel der Trockengestelle (15). Dazwischen kann die Wärmekammer (52) Öffnungen in ihrer Decke aufweisen, durch welche die gesammelte Warmluft nach oben zum Trockengut (2) ausströmen und von der Belüftungseinrichtung (49) durch die Trockengestelle (15) geblasen und verteilt werden kann. Über die Zuführung (53) kann Abwärme aus der Anlage (1), z. B. vom Brennofen (7) oder von anderer Stelle aufgenommen und in die Wärmekammer (52) zugeführt werden. Hierfür wird beispielsweise die Umgebungsluft am Ofen abgesaugt. Alternativ kann Abwärme über Wärmetauscher zum Erwärmen der in die Wärmekammer (52) zugeführten Luft genutzt werden.

Die Fördereinrichtung (46) kann in beliebig geeigneter Weise ausgebildet sein. Die nebeneinander angeordneten Lagerreihen oder Förderreihen (51) können synchron bewegt werden, was insbesondere bei gleichartigen Formteilen (2) gemacht wird. Die Zoneneinteilung ist im gezeigten Ausführungsbeispiel quer zur Förderrichtung (54) gelegt. Zusätzlich kann eine Zoneneinteilung zwischen den Lagerreihen (51) und in Förderrichtung (54) bestehen. Durch die Zonenbildung können in der mehrteiligen Trocknungskammer (9) verschiedene Formteile (2) gleichzeitig und unabhängig voneinander getrocknet werden. Damit lässt sich die Trocknungseinrichtung (8) auf für kleine Chargen wirksam und wirtschaftlich betreiben. Ferner ist es bei einem Durchlauftrockner (44) und insbesondere auch bei einer Zonenaufteilung möglich, die Lagerreihen (51) unabhängig voneinander zu bewegen. Die Lagerreihen (51) können dabei unterschiedliche Arten von Formteilen (2) mit unterschiedlichen Trocknungserfordernissen beinhalten. Den Trocknungserfordernissen wird durch eine unterschiedliche Verweildauer der Formteile (2) im Durchlauftrockner (44) und in den ggf. vorhandenen querliegenden Trockenzonen (45) Rechnung getragen.

Die Trocknungseinrichtung (8) und die Beschickung (47) sowie eine Entladung (nicht dargestellt) am Trocknerende können vollautomatisch ausgebildet sein und funktionieren. Hierbei kann auch eine Automatisierung nach Lagerreihen (51) getrennt vorliegen.

Abwandlungen der gezeigten und beschriebenen Ausführungsformen sind in verschiedener Weise möglich. Insbesondere können die verschiedenen vorbeschriebenen Varianten beliebig untereinander kombiniert und ausgetauscht werden.

Abwandlungen des mehrteiligen Trockenraums (9) und des Trockenprozesses sind ebenfalls in verschiedener Weise möglich. Der Durchlauftrockner (44) hat in der gezeigten Ausführungsform sechs Lagerreihen (51). Er kann alternativ nur eine Lagerreihe (51) oder eine beliebige andere Reihenzahl aufweisen. Ferner kann ein Durchlauftrockner (44) auch in Verbindung mit einem einteiligen Trocknungsraum (9) wie im ersten Ausführungsbeispiel Verwendung finden. Der Fertigtrockenbereich (43) kann alternativ ein überdachter Abstellbereich in der Art eines Lagers sein, in dem die hinreichend stabilisierten Formteile (2) aus dem Klimaraum (42) gebracht werden. In diesem Abstellbereich kann auf eine Belüftungseinrichtung verzichtet werden, sodass die Formteile (2) auf natürliche Weise unter Umgebungseinfluss fertigtrocknen. Dieser Abstellbereich kann sich außerhalb der Anlage (1) befinden.

Bei der gezeigten Ausführungsform von Figur 5 und 6 sind die Trockenzonen (45) in Förderrichtung (54) ungefähr gleich lang. Sie können alternativ unterschiedliche Längen aufweisen. Ferner ist es möglich, innerhalb eines Durchlauftrockners (44) verschieden lange Trockenzonen (45) nebeneinander anzuordnen, um dadurch unterschiedlichen Trocknungserfordernissen von Formteilen (2) Rechnung zu tragen. Auch die Zonenzahl kann von Lagerreihe zu Lagerreihe oder nach Gruppen von Lagerreihen variieren.

### BEZUGSZEICHENLISTE

- 1: Anlage, Produktionsanlage
- 2: Trockengut, keramisches Teil, Ziegel
- 3: Anlagenraum, Werkhalle
- 4: Produktionseinrichtung
- 5: Presse
- 6: Trenneinrichtung
- 7: Brennofen
- 8: Trocknungseinrichtung
- 9: Trocknungsraum
- 10: Wand
- 11: Durchlassöffnung
- 12: Trockenluft
- 13: Zuluft
- 14: Abluft
- 15: Aufnahme, Trockengestell
- 16: Freiraum, Gang
- 17: Einrichtung zur Einstellung des Klimas
- 18: Einrichtung zur Belüftung
- 19: Einrichtung zum Luftdurchsatz
- 20: Einrichtung zur Luftumwälzung
- 21: Einrichtung zur Klimamessung
- 22: Feuchtemesser
- 23: Temperaturmesser
- 24: Trocknungssteuerung
- 25: Recheneinheit, Computer
- 26: Zeitglied
- 27: steuerbarer Verschluss, Klappe
- 28: Durchsatzlüfter, Ventilator
- 29: Umwälzlüfter, Drehlüfter
- 30: Einrichtung zur Feuchtebestimmung des Trockenguts
- 31: Leitwertmesser
- 32: Elektrode
- 33: Elektrode
- 34: Spannungsquelle
- 35: Messgerät
- 36: Schwindungsmesser
- 37: Stecker
- 38: Längenmesser, Potenziometer
- 39: Plattenwärmetauscher
- 40: Leitung, Zuluftleitung
- 41: Leitung, Abluftleitung
- 42: Trockenraumteil, Klimaraum
- 43: Trockenraumteil, Fertigtrockenbereich
- 44: Durchlauftrockner
- 45: Trockenzone
- 46: Verteilung
- 47: Beschickungseinrichtung
- 48: Fördereinrichtung
- 49: Belüftungseinrichtung
- 50: Gasse
- 51: Lagerreihe
- 52: Wärmekammer
- 53: Zuführung
- 54: Transportrichtung

## Patentansprüche

1. Verfahren zum Trocknen von Formteilen (2) aus plastischen Massen, insbesondere keramischen oder keramikähnlichen Massen, in einem von Wänden (10) umgebenen Trocknungsraum (9) mittels zugeführter Trockenluft (12), **dadurch gekennzeichnet, dass** der Trocknungsprozess im Wesentlichen mit der aus der Umgebung des Trocknungsraums (9) zur Verfügung gestellten Wärmeenergie durchgeführt wird.

2. Verfahren nach Anspruch 1, **dadurch gekennzeichnet, dass** die Feuchte der Formteile (2) gemessen und der Trocknungsprozess über diese Feuchte gesteuert oder geregelt wird.

3. Verfahren nach Anspruch 1 oder 2, **dadurch gekennzeichnet, dass** bei Erreichen einer vorgegebenen Restfeuchte in den Formteilen (2) Trocknungsprozess beendet oder verlagert wird.

4. Verfahren nach Anspruch 1, 2 oder 3, **dadurch gekennzeichnet, dass** die zum Trocknen der keramischen Teile (2) erforderliche Wärmeenergie im Wesentlichen aus der äußeren Umgebung des Trocknungsraums (9), insbesondere aus einem Anlagenraum (3) eingebracht und über die Zuluft (13) aus der Umgebungsluft zugeführt wird, wobei der Trocknungsprozess und das Klima im Trocknungsraum (9) durch Beeinflussung des Durchsatzes der Trockenluft (12) gesteuert oder geregelt wird.

5. Verfahren nach einem der Ansprüche 1 bis 4, **dadurch gekennzeichnet, dass** der elektrische Leitwert in den Formteilen (2) gemessen wird.

6. Verfahren nach einem der Ansprüche 1 bis 5, **dadurch gekennzeichnet, dass** bei Erreichen einer Knickstelle im Leitwertverlauf die Klimaregelung abgeschaltet und die Belüftung der Formteile (2) intensiviert wird.

7. Trocknungseinrichtung zur Durchführung des Verfahrens nach einem die Ansprüche 1 bis 6 und zum Trocknen von Formteilen (2) aus plastischen Massen, insbesondere keramischen oder keramikähnlichen Massen, mittels zugeführter Trockenluft (12), bestehend aus mindestens einem von Wänden (10) umgebenen Trocknungsraum (9) mit einer Einrichtung (17) zur Einstellung des Klimas im Trocknungsraum (9) und einer Trocknungssteuerung (24), **dadurch gekennzeichnet, dass** die Trocknungseinrichtung (8) im wesentlichen auf eine Wärmezufuhr aus der äußeren Umgebung des Trocknungsraums (9) ausgelegt ist.

8. Trocknungseinrichtung nach Anspruch 7, **dadurch gekennzeichnet, dass** die Trocknungseinrichtung (8) eine Einrichtung (30) zur Feuchtebestimmung der Formteile (2) aufweist.

9. Trocknungseinrichtung nach Anspruch 7 oder 8, **dadurch gekennzeichnet, dass** die Trocknungseinrichtung (8) keine Heizeinrichtung für die Trockenluft aufweist.

10. Trocknungseinrichtung nach Anspruch 7, 8 oder 9, **dadurch gekennzeichnet, dass** die Einrichtung (17) zur Einstellung des Klimas eine Einrichtung (21) zur Klimamessung mit einem Feuchtemesser (22) und einem Temperaturmesser (23) aufweist.

11. Trocknungseinrichtung nach einem der Ansprüche 7 bis 10, **dadurch gekennzeichnet, dass** die Einrichtung (17) zur Einstellung des Klimas eine Belüftungseinrichtung (18) mit einer oder mehreren Durchlassöffnungen (11) mit einem steuerbaren Verschluss (27) in mindestens einer Wand (10) und eine Einrichtung (19) für den Trockenluftdurchsatz in und aus dem Trocknungsraum (9) aufweist.

12. Trocknungseinrichtung nach einem der Ansprüche 7 bis 11, **dadurch gekennzeichnet, dass** die Trocknungseinrichtung (8) einen Wärmetauscher (39) für Zu- und Abluft (13,14) aufweist.

13. Trocknungseinrichtung nach einem der Ansprüche 7 bis 12, **dadurch gekennzeichnet, dass** die Einrichtung (30) zur Feuchtebestimmung der Formteile (2) mindestens einen mit einem Formteil (2) verbindbaren elektrischen Leitwertmesser (31) und/oder mindestens einen mit einem Formteil (2) verbindbaren Schwindungsmesser (36) aufweist.

14. Trocknungseinrichtung nach einem der Ansprüche 7 bis 13, **dadurch gekennzeichnet, dass** der Trocknungsraum (9) mehrere Trockenraumteile (42,43) für einen mehrstufigen Trocknungsprozess aufweist, wobei der Trocknungsraum (9) einen umhausten Klimaraum (42) mit einer nach der Feuchte der Formteile (2) geregelten Klimatisierung und einen anschließenden Fertigtrockenbereich (43) mit einer forcierten Trocknung aufweist.

15. Anlage zur Durchführung des Verfahrens nach einem die Ansprüche 1 bis 6 und zur Herstellung keramischer Teile (2), bestehend aus einer Produktionseinrichtung (4) und einer Trocknungseinrichtung (8) nach einem die Ansprüche 7 bis 14, **dadurch gekennzeichnet, dass** die Produktionseinrichtung (4) und die Trocknungseinrichtung (8) gemeinsam in einem Anlagenraum (3) angeordnet sind, wobei die Luft aus dem Anlagenraum (3) den keramischen Teilen (2) im wesentlichen ohne Zusatzbeheizung zur Trocknung zugeführt wird.

## Claims

1. Method for drying moulded parts (2) made from plastic masses, in particular ceramic or ceramic-like masses, in a drying space (9), surrounded by walls (10), by means of supplied drying air (12), **characterized in that** the drying process is carried out essentially by means of the heat energy available from the surroundings of the drying space (9).

2. Method according to Claim 1, **characterized in that** the moisture content of the moulded parts (2) is measured and the drying process is controlled or regulated via this moisture content.

3. Method according to Claim 1 or 2, **characterized in that** the drying process is terminated or transferred when a stipulated residual moisture content in the moulded parts (2) is reached.

4. Method according to Claim 1, 2 or 3, **characterized in that** the heat energy required for drying the ceramic parts (2) is introduced essentially from the external surroundings of the drying space (9), in particular from a plant space (3), and is supplied from the ambient air via the incoming air (13), the drying process and the climate in the drying space (9) being controlled or regulated by influencing the throughput of the drying air (12).

5. Method according to one of Claims 1 to 4, **characterized in that** the electric conductance in the moulded parts (2) is measured.

6. Method according to one of Claims 1 to 5, **characterized in that**, when a kink in the conductance profile is reached, climate regulation is switched off and the ventilation of the moulded parts (2) is intensified.

7. Drying device for carrying out the method according to one of Claims 1 to 6 and for drying moulded parts (2) made from plastic masses, in particular ceramic or ceramic-like masses, by means of supplied drying air (12), consisting of at least one drying space (9) surrounded by walls (10) and having a device (17) for setting the climate in the drying space (9) and a drying control (24), **characterized in that** the drying device (8) is designed essentially for supplying heat from the external surroundings of the drying space (9).

8. Drying device according to Claim 7, **characterized in that** the drying device (8) has a device (30) for determining the moisture content of the moulded parts (2).

9. Drying device according to Claim 7 or 8, **characterized in that** the drying device (8) has no heating device for the drying air.

10. Drying device according to Claim 7, 8 or 9, **characterized in that** the device (17) for setting the climate has a device (21) for climate measurement with a moisture meter (22) and with a thermometer (23).

11. Drying device according to one of Claims 7 to 10, **characterized in that** the device (17) for setting the climate has a ventilation device (18) with one or more passage orifices (11) having a controllable closure (27) in at least one wall (10) and a device (19) for the throughput of drying air into and out of the drying space (9).

12. Drying device according to one of Claims 7 to 11, **characterized in that** the drying device (8) has a heat exchanger (39) for incoming and outgoing air (13, 14).

13. Drying device according to one of Claims 7 to 12, **characterized in that** the device (30) for determining the moisture content of the moulded parts (2) has at least one electric conductance meter (31) connectable to a moulded part (2) and/or at least one shrinkage meter (36) connectable to a moulded part (2).

14. Drying device according to one of Claims 7 to 13, **characterized in that** the drying space (9) has a plurality of drying-space parts (42, 43) for a multistage drying process, the drying space (9) having a housed-around climate space (42) with climate control regulated according to the moisture content of the moulded parts (2) and a following finish-drying region (43) with forced drying.

15. Plant for carrying out the method according to one of Claims 1 to 6 and for the production of ceramic parts (2), consisting of a production device (4) and of a drying device (8) according to one of Claims 7 to 14, **characterized in that** the production device (4) and the drying device (8) are arranged together in a plant space (3), the air from the plant space (3) being supplied for drying to the ceramic parts (2) essentially without additional heating.

## Revendications

1. Procédé pour sécher des pièces moulées (2) en masses plastiques, en particulier en masses céramiques ou de type céramique, dans une chambre de séchage (9) entourée de parois (10) au moyen d'air sec envoyé (12), **caractérisé en ce que** l'on effectue le processus de séchage essentiellement avec l'énergie thermique fournie par l'environnement de la chambre de séchage (9).

2. Procédé selon la revendication 1, **caractérisé en ce que** l'on mesure l'humidité des pièces moulées (2) et on commande ou on régule le processus de séchage en fonction de cette humidité.

3. Procédé selon la revendication 1 ou 2, **caractérisé en ce que** l'on termine ou l'on déplace le processus de séchage lorsqu'une humidité résiduelle prédéterminée est atteinte dans les pièces moulées (2).

4. Procédé selon la revendication 1, 2 ou 3, **caractérisé en ce que** l'on introduit l'énergie thermique nécessaire pour le séchage des pièces céramiques (2) essentiellement à partir de l'environnement extérieur de la chambre de séchage (9), en particulier à partir d'une enceinte d'installation (3) et on la fournit au moyen de l'air (13) envoyé à partir de l'air environnant, dans lequel on commande ou on régule le processus de séchage et le climat dans la chambre de séchage (9) en agissant sur le débit de l'air sec (12).

5. Procédé selon l'une quelconque des revendications 1 à 4, **caractérisé en ce que** l'on mesure la conductance électrique dans les pièces moulées (2).

6. Procédé selon l'une quelconque des revendications 1 à 5, **caractérisé en ce que** l'on coupe la régulation du climat et on intensifie la ventilation des pièces moulées (2) lorsque l'on atteint un point d'inflexion dans la courbe de la conductance.

7. Dispositif de séchage pour la mise en oeuvre du procédé selon l'une quelconque des revendications 1 à 6 et pour sécher des pièces moulées (2) en masses plastiques, en particulier en masses céramiques ou de type céramique, au moyen d'air sec envoyé (12), se composant d'au moins une chambre de séchage (9) entourée de parois (10) avec un dispositif (17) pour le réglage du climat dans la chambre de séchage (9) et une commande de séchage (24), **caractérisé en ce que** le dispositif de séchage (8) est conçu essentiellement sur la base d'un apport de chaleur à partir de l'environnement extérieur de la chambre de séchage (9).

8. Dispositif de séchage selon la revendication 7, **caractérisé en ce que** le dispositif de séchage (8) comporte un dispositif (30) pour la détermination de l'humidité des pièces moulées (2).

9. Dispositif de séchage selon la revendication 7 ou 8, **caractérisé en ce que** le dispositif de séchage (8) ne comporte pas de dispositif de chauffage pour l'air sec.

10. Dispositif de séchage selon la revendication 7, 8 ou 9, **caractérisé en ce que** le dispositif (17) pour le réglage du climat comporte un dispositif (21) pour la mesure du climat avec un hygromètre (22) et un pyromètre (23).

11. Dispositif de séchage selon l'une quelconque des revendications 7 à 10, **caractérisé en ce que** le dispositif (17) pour le réglage du climat comporte un dispositif de ventilation (18) avec une ou plusieurs ouvertures de passage (11) avec un obturateur réglable (27) dans au moins une paroi (10) et un dispositif (19) pour le passage d'air sec dans et hors de la chambre de séchage (9).

12. Dispositif de séchage selon l'une quelconque des revendications 7 à 11, **caractérisé en ce que** le dispositif de séchage (8) comporte un échangeur de chaleur (39) pour l'air entrant et l'air sortant (13, 14).

13. Dispositif de séchage selon l'une quelconque des revendications 7 à 12, **caractérisé en ce que** le dispositif (30) pour la détermination de l'humidité des pièces moulées (2) comporte au moins un système de mesure de conductance électrique (31) pouvant être relié à une pièce moulée (2) et/ou au moins un système de mesure de retrait (36) pouvant être relié à une pièce moulée (2).

14. Dispositif de séchage selon l'une quelconque des revendications 7 à 13, **caractérisé en ce que** la chambre de séchage (9) comporte plusieurs parties de chambre de séchage (42, 43) pour un processus de séchage en plusieurs étapes, dans lequel la chambre de séchage (9) comprend une chambre climatisée carénée (42) avec une climatisation régulée en fonction de l'humidité des pièces moulées (2) et une zone sèche finale (43) qui suit avec un séchage forcé.

15. Installation pour la mise en oeuvre du procédé selon l'une quelconque des revendications 1 à 6 et pour la production de pièces céramiques (2), se composant d'un dispositif de production (4) et d'un dispositif de séchage (8) selon l'une quelconque des revendications 7 à 14, **caractérisée en ce que** le dispositif de production (4) et le dispositif de séchage (8) sont disposés ensemble dans une enceinte d'installation (3), l'air étant envoyé aux pièces céramiques (2) à partir de l'enceinte d'installation (3) essentiellement sans chauffage supplémentaire pour le séchage.
